# FASCICULE DE BREVET EUROPEEN

(11) **EP 3 559 810 B1**
(45) Date de publication et mention de la délivrance du brevet: **18.02.2026**
(21) Numéro de dépôt: 17825258.1
(22) Date de dépôt: 26.12.2017
(51) Int. Cl.: G06F 9/52

(54) **PROCÉDÉ DE CONTRÔLE D'UN PROCESSEUR MULTI-COEURS ET CALCULATEUR ASSOCIÉ**
VERFAHREN ZUR STEUERUNG EINES MULTIKERNPROZESSORS SOWIE ZUGEHÖRIGER COMPUTER
METHOD FOR CONTROLLING A MULTI-CORE PROCESSOR AND ASSOCIATED COMPUTER

(30) Priorité: 26.12.2016 FR 1601859
(43) Date de publication de la demande: 30.10.2019
(73) Titulaire: Thales, 92400 Courbevoie (FR); INRIA - Institut National de Recherche en Informatique et en Automatique, 78150 Le Chesnay (FR); SORBONNE UNIVERSITE, 75006 Paris (FR)
(72) Inventeur: COURTAUD, Cédric, 91767 Palaiseau (FR); JEAN, Xavier, 91767 Palaiseau (FR); FAUGERE, Madeleine, 91767 Palaiseau (FR); MULLER, Gilles, 75589 Paris cedex 12 (FR); SOPENA, Julien, 75252 Paris cedex 5 (FR); LAWALL, Julia, 75589 Paris cedex 12 (FR)
(74) Mandataire: Lavoix
(86) Numéro de dépôt international: PCT/EP2017/084589
(87) Numéro de publication internationale: WO 2018/122221

(56) Documents cités:
- FR-A1- 3 010 201
- ANDREAS SCHRANZHOFER ET AL: "Timing Analysis for TDMA Arbitration in Resource Sharing Systems", REAL-TIME AND EMBEDDED TECHNOLOGY AND APPLICATIONS SYMPOSIUM (RTAS), 2010 16TH IEEE, IEEE, PISCATAWAY, NJ, USA, 12 April 2010 (2010-04-12), pages 215 - 224, XP031677331, ISBN: 978-1-4244-6690-0
- JEAN XAVIER: "Ma�trise de la couche hyperviseur sur les architectures multi-coeurs COTS dans un contexte avionique", 18 June 2015 (2015-06-18), XP055915750, Retrieved from the Internet <URL:https://pastel.archives-ouvertes.fr/tel-01341758/document> [retrieved on 20220426]
- JEAN XAVIER ET AL: "A software approach for managing shared resources in multicore IMA systems", 2013 IEEE/AIAA 32ND DIGITAL AVIONICS SYSTEMS CONFERENCE (DASC), IEEE, 5 October 2013 (2013-10-05), XP032553222, ISSN: 2155-7195, [retrieved on 20140114], DOI: 10.1109/DASC.2013.6712643
- BERTHON GUY ET AL: "White Paper on Issues Associated with Interference Applied to Multicore Processors", 29 January 2016 (2016-01-29), XP055915739, Retrieved from the Internet <URL:https://www.faa.gov/aircraft/air_cert/design_approvals/air_software/media/SDS_DO005_White_Paper.pdf> [retrieved on 20220426]
- GIRBAL SYLVAIN ET AL: "DETERMINISTIC PL ATFORM SOFTWARE FOR HARD REAL-TIME SYSTEMS USING MULTI-CORE COTS", 17 September 2015 (2015-09-17), XP055915803, Retrieved from the Internet <URL:https://ieeexplore.ieee.org/stampPDF/getPDF.jsp?tp=&arnumber=7311481&ref=aHR0cHM6Ly9zY2hvbGFyLmdvb2dsZS5jb20v> [retrieved on 20220426]
- GUY DURRIEU ET AL: "Predictable Flight Management System Implementation on a Multicore Processor Predictable Flight Management System Implementation on a Multicore Processor", ERTS '14, 4 February 2014 (2014-02-04), Toulouse, France, pages 1 - 8, XP055363496, Retrieved from the Internet <URL:https://hal.archives-ouvertes.fr/hal-01121700/document> [retrieved on 20170410]
- DASARI DAKSHINA ET AL: "Identifying the sources of unpredictability in COTS-based multicore systems", 2013 8TH IEEE INTERNATIONAL SYMPOSIUM ON INDUSTRIAL EMBEDDED SYSTEMS (SIES), IEEE, 19 June 2013 (2013-06-19), pages 39 - 48, XP032484419, DOI: 10.1109/SIES.2013.6601469
- RODOLFO PELLIZZONI ET AL: "A Predictable Execution Model for COTS-Based Embedded Systems", REAL-TIME AND EMBEDDED TECHNOLOGY AND APPLICATIONS SYMPOSIUM (RTAS), 2011 17TH IEEE, IEEE, 11 April 2011 (2011-04-11), pages 269 - 279, XP031866545, ISBN: 978-1-61284-326-1, DOI: 10.1109/RTAS.2011.33

## Description

L'invention vise le domaine des calculateurs à processeur multi-cœurs comprenant plusieurs cœurs physiquement distincts partageant des ressources matérielles communes.

Chaque cœur d'un processeur multi-cœurs est une unité de calcul physiquement distincte des autres cœurs. La présence de plusieurs cœurs permet l'exécution en parallèle de plusieurs applications logicielles, afin d'offrir de meilleures performances globales.

Pour l'exécution des applications logicielles, les cœurs utilisent des ressources matérielles communes. Ces ressources communes sont par exemple des mémoires, notamment une mémoire principale, un réseau d'interconnexion, des interfaces entrée/sortie (ou interface I/O) du calculateur (Bus rapide PCle ou Réseau Ethernet par exemple) ou encore une interface d'interconnexion entre les cœurs et ces différentes ressources matérielles communes.

Les cœurs peuvent exécuter simultanément plusieurs applications logicielles de manière concurrente, chaque cœur exécutant une ou plusieurs applications logicielles. Cette concurrence entraîne une incertitude dans le temps de traitement des données par le processeur multi-cœurs.

Par exemple, lorsqu'une mémoire principale doit répondre à plusieurs transactions émises par les applications logicielles en même temps, il est courant que les transactions soient traitées séquentiellement, ce qui entraîne des retards dans l'exécution de certaines applications logicielles. De tels conflits sont nommés « interférences ».

Du point de vue de l'application logicielle, les interférences ralentissent le temps de réponse des ressources matérielles communes, ce qui entraine à son tour des retards dans l'exécution de l'application logicielle. Ces retards peuvent constituer la majorité du temps d'exécution de l'application logicielle.

Or, la plupart des systèmes électroniques embarqués tels que ceux utilisés dans le domaine avionique, le domaine spatial ou le domaine ferroviaire, ont besoin de déterminisme dans la durée des traitements pour satisfaire des contraintes de certification.

Un autre problème rencontré dans l'industrie est celui du processus d'intégration du calculateur et des applications logicielles prévues pour être exécutées par le calculateur, qui est généralement itératif. Des interférences peuvent apparaitre au cours du processus d'intégration itératif, entraînant une dégradation subite des performances à une étape du processus d'intégration, remettant en cause les étapes précédentes du processus d'intégration.

Le document Guy Durrieu et al. « Predictable Flight Management System Implementation on a Multicore Processor » propose un modèle d'exécution de tâches par un processeur multi-cœurs d'un système avionique, consistant à séparer les tâches en tâches périodiques et en tâches apériodiques et rédémarrables, à exécuter les tâches périodiques sur des cœurs dédiés selon une planification prédéterminée utilisant un module de tâche de type « AER » dans lequel chaque tâche périodique s'exécute en trois phases (acquisition, exécution et restitution), les tâches périodiques étant réalisées sans chevauchement de leurs phases d'acquisition ou de restitution, et à exécuter les tâches apériodiques et redémarrables sur des cœurs dédiés distincts de ceux dédiés aux tâches périodiques.

Le document Jean Xavier: "Maîtrise de la couche hyperviseur sur les architectures multi-coeurs COTS dans un contexte avionique", 18 juin 2015, XP055915750 est une thèse de doctorat s'intéressant à la maîtrise de processeurs multi-cœurs COTS dans le but de les rendres utilisables dans des équipements avioniques, qui ont des exigences temps-réel dures.Un des buts de l'invention est de proposer un procédé de contrôle d'un processeur multi-cœurs implémentant un procédé de contrôle efficace, permettant une bonne utilisation des ressources matérielles communes tout en assurant un bon niveau de déterminisme dans la durée de traitement des données.

A cet effet, l'invention propose un procédé de contrôle d'un processeur multi-cœurs selon la revendication 1.

Des caractéristiques optionnelles sont définies aux revendications 2 à 8.

L'invention concerne également un calculateur selon la revendication 9.

L'invention et ses avantages seront mieux compris à la lecture de la description qui va suivre, donnée uniquement à titre d'exemple, et faite en référence aux dessins annexés, sur lesquels :
- la Figure 1 est une vue schématique d'un calculateur d'un système avionique embarqué, le calculateur comprenant un processeur multi-cœurs possédant plusieurs cœurs partageant des ressources communes ;
- les Figures 2 à 4 sont des frises temporelles illustrant des partitions temporelles de partage des ressources communes.

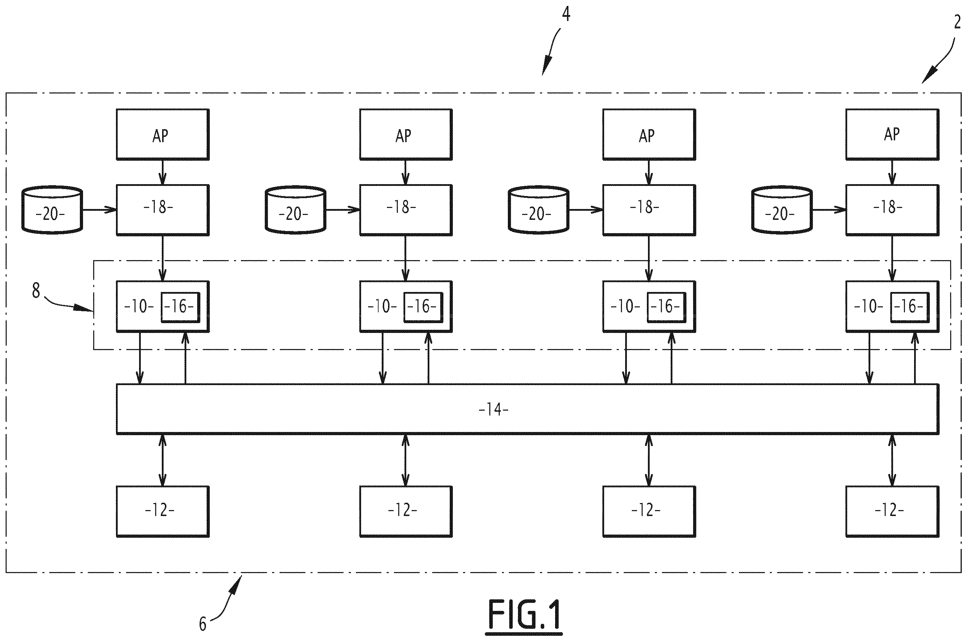

Sur la Figure 1, un système avionique 2 embarqué dans un aéronef 4 possède un calculateur 6 possédant un processeur 8 multi-cœurs comprenant plusieurs cœurs 10, des ressources communes 12 partagées par les cœurs 10, et une interconnexion 14 électronique par l'intermédiaire de laquelle les cœurs 10 accèdent aux ressources communes 12.

Les cœurs 10 sont physiquement distincts. Chaque cœur 10 est une unité de calcul individuelle comprenant ses propres composants électroniques, distincts de ceux des autres cœurs 10.

Les ressources communes 12 sont des ressources matérielles partagées par les cœurs 10. Les ressources communes 12 sont par exemple des mémoires, telles qu'une mémoire principale, une mémoire cache partagée (par exemple une mémoire de niveau 2 dite Cache L2 ou de niveau 3 dite Cache L3), ou des interfaces entrée/sortie (ou interface I/O). Une interface entrée/sortie permet d'émettre ou de recevoir des signaux sur un bus de communication (non représenté), par exemple un bus de communication du système avionique pour une communication entre plusieurs calculateurs ou entre les calculateurs et des sondes de mesure ou des actuateurs.

L'interconnexion 14 est par exemple un bus d'interconnexion. De préférence, tous les cœurs 10 du processeur 8 sont reliés aux ressources communes 12 par l'intermédiaire du même et unique moyen formé par l'interconnexion 14.

Chaque cœur 10 est apte à exécuter une ou plusieurs applications logicielles utiles, de préférence sous le contrôle d'un système d'exploitation informatique (ou « OS » pour « Operating System » en anglais), qui est une application logicielle particulière exécutée par le cœur 10 et qui contrôle l'utilisation des ressources logicielles ou matérielles accessibles à ce cœur 10 (y compris les ressources communes 12) par les applications logicielles utiles. Dans la suite, le terme « application logicielle AP » désigne les applications logicielles utiles ou le système d'exploitation informatique exécuté(e)s par un cœur 10.

Lors de son exécution, une application logicielle AP exécutée par un cœur 10 excite le cœur 10 qui génère des requêtes qui sont traitées par le cœur 10. Une requête correspond généralement à une demande de lecture ou d'écriture à une adresse déterminée de l'espace mémoire adressable.

Chaque cœur 10 possède une mémoire cache privée 16, qui est utilisée exclusivement par ce cœur 10, et qui est physiquement intégrée au cœur 10. La mémoire cache privée 16 est utilisée pour le stockage de données chargées à partir des ressources communes 12 et susceptibles d'être requises par les applications logicielles AP exécutées par le cœur 10.

Si les données correspondant à une requête émise par une application logicielle AP sont présentes dans la mémoire cache privée 16, la requête peut être traitée au niveau du cœur 10 sans générer d'accès à la ressource commune 12.

Si les données correspondant à une requête émise par une application logicielle AP ne sont pas présentes dans la mémoire cache privée 16, il convient que le cœur 10 réalise une transaction avec une ressource commune 12 pour charger les données et en stocker une copie dans la mémoire cache privée 16. Dans la suite, une « transaction » désigne un échange de données entre un cœur 10 déterminé et une ressource commune 12 déterminée.

Dans un mode de réalisation, chaque cœur 10 comprend un contrôleur d'accès 18 logiciel pour contrôler l'accès de ce cœur 10 aux ressources communes 12.

Le contrôleur d'accès 18 est une couche logicielle interposée entre les applications exécutées par le cœur 10 (y compris un système d'exploitation exécuté par le cœur 10) et le cœur 10 lui-même. Le contrôleur d'accès 18 est un programme informatique qui comprend des instructions de codes propres à ce programme. Le contrôleur d'accès 18 est par exemple intégré dans un hyperviseur.

Le cœur 10 exécute son propre contrôleur d'accès 18 localement, sans faire appel aux ressources communes 12. Le contrôleur d'accès 18 comprend des instructions de code qui sont entièrement stockées dans la mémoire cache privée 16 du cœur 10 et exécutables en utilisant uniquement la mémoire cache privée 16 de ce cœur 10.

La mémoire cache privée 16 du cœur 10 possède une capacité suffisante pour l'exécution du contrôleur d'accès 18. L'exécution du contrôleur d'accès 18 par le cœur 10 ne nécessite donc pas l'émission de transactions vers la ressource commune 12, susceptibles d'interférer avec l'activité des autres cœurs 10 dans les ressources communes 12.

Le contrôleur d'accès 18 de chaque cœur 10 est configuré pour intercepter chaque requête adressée au cœur 10 par l'application logicielle AP exécutée par ce cœur 10 et nécessitant une transaction correspondante par le cœur 10 vers la ressource commune 12, et pour planifier la transaction.

Dans un mode de réalisation, les données stockées dans la mémoire cache privée 16 sont organisées en pages de données, et le cœur 10 est configuré pour déclencher un défaut de page en cas d'absence de données associées à une requête dans la mémoire cache privée 16.

Le contrôleur d'accès 18 est alors par exemple configuré pour s'exécuter lors d'un défaut de page déclenché par l'émission d'une requête d'une application logicielle AP exécutée par le cœur 10 visant des données non présentes dans la mémoire cache privée 16 du cœur 10.

Lors de l'exécution des applications logicielles AP par les cœurs 10, les cœurs 10 sont en concurrence pour l'utilisation des ressources communes 12. Or, chaque transaction entre un cœur 10 déterminé et une ressource commune 12 déterminée doit être effectuée avec un coût temporel borné.

Le partage de ressources communes 12 par plusieurs cœurs 10 nécessite donc de définir une politique de partage de ressources communes 12, c'est-à-dire un ensemble de règles restreignant l'activité concurrente des différents cœurs 10 dans les ressources communes 12.

Le contrôleur d'accès 18 de chaque cœur 10 est configuré pour réaliser les transactions nécessaires en mettant en œuvre la politique de partage des ressources communes 12.

Le procédé de contrôle met en œuvre une politique de partage d'au moins une ressource commune 12 basée sur des fenêtres temporelles F distinctes, chaque fenêtre temporelle F étant allouée à un ou plusieurs cœurs 10 spécifiques pour l'accès à la ressource commune 12. Seuls les cœurs 10 auxquels est allouée une fenêtre temporelle F sont autorisés à accéder à la ressource commune 12 pendant cette fenêtre temporelle F.

Dans un mode de réalisation, chaque fenêtre temporelle F est allouée exclusivement à un seul cœur 10. Ainsi, les requêtes émises par les cœurs 10 aux ressources communes 12 seront isolées temporellement. Cette politique de partage des ressources matérielles est du type accès multiple à partition temporelle (ou TDMA pour Time Division Multiple Access). En variante, au moins une fenêtre temporelle F est allouée à plusieurs cœurs 10.

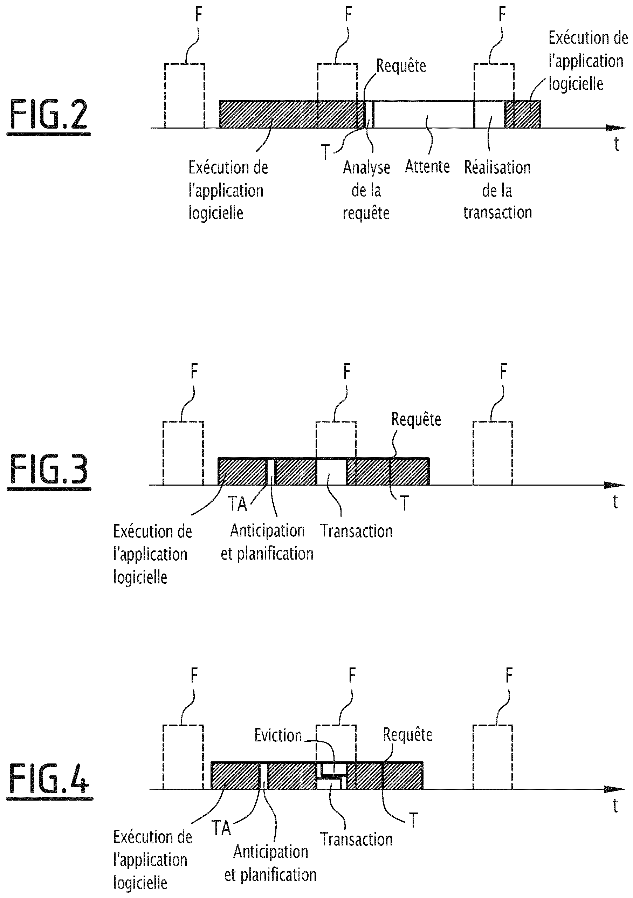

La Figure 2 illustre un procédé de contrôle selon l'art antérieur.

Des fenêtres temporelles F sont allouées à un cœur 10 pour l'accès à une ressource commune 12.

Les périodes hachurées correspondent à l'exécution de l'application logicielle AP par le cœur 10 à partir de la mémoire cache privée 16, et les périodes blanches intermédiaires correspondent à des interruptions de l'exécution de l'application logicielle AP, lorsqu'une donnée n'est pas disponible dans la mémoire cache privée 16.

Une application logicielle AP est exécutée par défaut à partir de la mémoire cache privée 16 du cœur 10 (première période hachurée sur la Figure 2). L'application logicielle AP émet en cours de fonctionnement des requêtes qui sont servies à partir de la mémoire cache privée 16.

A un instant T, l'application logicielle AP émet une requête d'accès à des données qui ne sont pas disponibles dans la mémoire cache privée 16 et qui nécessite donc une transaction entre le cœur 10 et la ressource commune 12 pour charger ces données dans la mémoire cache privée 16 et restituer ces données à l'application logicielle AP.

La requête est émise à un instant T situé hors d'une fenêtre temporelle F allouée au cœur 10 pour l'accès à la ressource commune 12. Le cœur 10 doit alors analyser la requête, attendre la prochaine fenêtre temporelle F allouée au cœur 10 pour l'accès à la ressource commune 12 pour réaliser la transaction avec la ressource commune 12, et récupérer les données correspondant à la requête de l'application logicielle AP (périodes blanches sur la Figure 2).

Une fois les données récupérées et chargées dans la mémoire cache privée 16, l'exécution de l'application logicielle AP à partir de la mémoire cache privée 16 reprend (deuxième période hachurée sur la Figure 2).

L'exécution de l'application logicielle AP est interrompue pendant l'analyse de la requête, l'attente de la prochaine fenêtre temporelle F et la réalisation de la transaction. La durée entre l'émission de la requête par l'application logicielle AP et la restitution des données à l'application logicielle AP comprend la durée d'analyse de la requête, la durée d'attente de la prochaine fenêtre temporelle F allouée au cœur 10 pour l'accès à la ressource commune 12 et la durée de la transaction. La durée d'attente d'une fenêtre temporelle F peut constituer la majorité du temps d'exécution d'une application logicielle. Le procédé de contrôle décrit ici est déterministe, mais inefficace.

Le procédé de contrôle selon l'invention, illustré sur la Figure 3, vise à optimiser le temps d'accès à au moins une ressource commune 12. Il permet l'utilisation de certaines fenêtres temporelles F en avance de phase - et sans durée d'attente - par rapport à l'exécution de l'application logicielle AP.

Le procédé de contrôle comprend :
- l'anticipation d'une requête devant être émise par une application logicielle AP exécutée par le cœur 10 et nécessitant une transaction avec la ressource commune 12, avant l'émission effective de cette requête par l'application logicielle AP;
- la planification de la transaction dans une fenêtre temporelle F allouée au cœur 10 pour l'accès à la ressource commune 12 et dans laquelle aucune transaction n'est planifiée ;
- la réalisation de la transaction planifiée dans la fenêtre temporelle F et le chargement des données dans la mémoire cache privée 16 du cœur 10 ; et
- la restitution des données à l'application logicielle AP à partir de la mémoire cache privée 16 à l'émission effective de la requête par l'application logicielle AP.

De préférence, la transaction est planifiée dans une fenêtre temporelle F libre, dans laquelle aucune transaction n'a encore été planifiée.

Il est souhaitable que la transaction soit planifiée dans une fenêtre temporelle F qui soit antérieure à l'émission effective de la requête par l'application logicielle AP. De préférence, la transaction est planifiée dans la prochaine fenêtre temporelle F libre dans laquelle aucune transaction n'a encore été planifiée.

Comme illustré sur la Figure 3, l'anticipation de la requête à un instant TA situé avant une fenêtre temporelle F inutilisée par le cœur 10 pour accéder à la ressource commune 12 permet de charger les données dans la mémoire cache privée 16 pendant une fenêtre temporelle F qui serait restée inutilisée par le cœur 10, et la restitution des données pour l'exécution de l'application logicielle à l'émission effective de la requête par l'application logicielle AP, à l'instant T d'émission de la requête.

En outre, comme illustré sur la Figure 3, la transaction est planifiée lorsque l'émission de la requête est anticipée, et l'exécution de l'application logicielle AP par le cœur 10 à partir de la mémoire cache privée 16 est poursuivie entre la planification et la fenêtre temporelle F pendant laquelle la transaction est planifiée. Etant donné que la transaction est anticipée et n'est pas encore nécessaire pour l'exécution de l'application logicielle AP, l'exécution de l'application logicielle AP peut être poursuivie.

Les données sont alors disponibles dès l'émission effective de la requête par l'application logicielle AP. Il en résulte que la durée d'exécution de l'application logicielle AP est fortement réduite. Ainsi, comme illustré sur la Figure 3, la restitution des données est effectuée immédiatement après l'émission de la requête par l'application logicielle AP.

En option, comme illustré sur la Figure 4, le procédé de contrôle comprend l'éviction des données de la mémoire cache privée 16 pendant la fenêtre temporelle F pendant laquelle est réalisée la transaction anticipée. L'éviction de données est une transaction d'écriture des données évincées de la mémoire cache privée 16 dans la ressource commune 12. Ces données évincées ont éventuellement été modifiées entretemps par l'application logicielle AP.

Ceci permet d'exploiter au mieux la fenêtre temporelle F qui serait restée inutilisée par le cœur 10 pour accéder à la ressource commune en évitant d'attendre une fenêtre temporelle F lors de l'émission de la requête par l'application logicielle AP.

Dans un mode de réalisation, le cœur 10 comprend un contrôleur d'accès 18 logiciel pour contrôler l'accès de ce cœur 10 à la ressource commune 12. Le contrôleur d'accès 18 est une couche logicielle interposée entre les applications exécutées par le cœur 10 (y compris un système d'exploitation exécuté par le cœur 10) et le cœur 10 lui-même. Le contrôleur d'accès 18 est un programme informatique qui comprend des instructions de codes propres à ce programme. Le contrôleur d'accès 18 est par exemple un hyperviseur.

Le cœur 10 exécute son propre contrôleur d'accès 18 localement, sans faire appel à la ressource commune 12. Le contrôleur d'accès 18 comprend des instructions de code qui sont entièrement stockées dans la mémoire cache privée 16 du cœur 10 et exécutables en utilisant uniquement la mémoire cache privée 16 de ce cœur 10.

La mémoire cache privée 16 du cœur 10 possède une capacité suffisante pour l'exécution du contrôleur d'accès 18. L'exécution du contrôleur d'accès 18 par le cœur 10 ne nécessite donc pas l'émission de transactions vers la ressource commune 12, susceptibles d'interférer avec l'activité des autres cœurs 10 dans les ressources communes 12.

Le contrôleur d'accès 18 de chaque cœur 10 est configuré pour intercepter chaque requête adressée au cœur 10 par l'application logicielle AP exécutée par ce cœur 10 conduisant à l'émission éventuelle d'une transaction correspondante par le cœur 10 vers la ressource commune 12, et, le cas échéant, pour commander l'émission de la transaction dans une fenêtre temporelle F allouée au cœur 10 pour l'accès à la ressource commune 12.

Le contrôleur d'accès 18 du cœur 10 est configuré pour mettre en œuvre la politique de partage des ressources communes 12.

Pour la mise en œuvre du procédé de contrôle, il convient, d'une part de déclencher les étapes d'anticipation et de planification au moment approprié au cours de l'exécution de l'application logicielle AP, et, d'autre part de déterminer une requête anticipée et de planifier la transaction dans une fenêtre allouée libre.

Dans un mode de mise en œuvre, l'application logicielle AP est configurée pour émettre un appel système (en anglais « hypercall ») pour déclencher les étapes d'anticipation et de planification, à une étape déterminée de l'exécution de l'application logicielle AP. Le code de l'application logicielle AP est modifié pour intégrer un appel système permettant de déclencher les étapes d'anticipation et de planification.

L'émission de l'appel système interrompt l'exécution de l'application logicielle AP et déclenche l'exécution du contrôleur d'accès 18.

Le contrôleur d'accès 18 est configuré pour déterminer une requête anticipée susceptible d'être émise prochainement par l'application logicielle AP et nécessitant une transaction avec la ressource commune 12, et pour planifier la transaction dans une fenêtre temporelle F libre.

Ce mode de réalisation permet de programmer chaque application logicielle AP spécifiquement pour le déclenchement des étapes d'anticipation et de planification, à un moment de l'exécution de l'application logicielle AP qui est particulièrement approprié pour cette application logicielle AP.

Selon l'invention, les étapes d'anticipation et de planification sont déclenchées lors du déclenchement d'un défaut de page provoqué par une première requête émise par l'application logicielle AP.

En effet, en cas de défaut de page, le cœur 10 interrompt l'exécution de l'application logicielle AP et le contrôleur d'accès 18 s'active pour réaliser la transaction de chargement des données de la première requête ayant déclenché le défaut de page.

Le contrôleur d'accès 18 est configuré pour déterminer une deuxième requête anticipée susceptible d'être émise prochainement par l'application logicielle AP et nécessitant une transaction avec la ressource commune 12, et pour planifier la transaction de la deuxième requête dans une fenêtre temporelle F libre. La deuxième requête anticipée est bien entendu différente de la première requête émise qui a déclenché le défaut de page.

Dans ce mode de réalisation, la transaction de la première requête émise ayant déclenché le défaut de page sera réalisée dans la prochaine fenêtre temporelle F libre, et la transaction de la deuxième requête anticipée sera planifiée dans une autre fenêtre temporelle F libre postérieure pour ne pas retarder la transaction liée à la première requête émise et ayant déclenché le défaut de page.

Ce mode de mise en œuvre permet d'éviter de modifier le code des applications logicielles exécutées par le cœur 10, et est applicable à toute application logicielle AP exécutée par le cœur 10.

En option, l'étape d'anticipation est déclenchée par une « exception » demandée par l'application logicielle AP au cours de son exécution. Une exception est une situation exceptionnelle résultant de l'exécution de l'application logicielle AP et nécessitant une interruption de l'exécution de l'application logicielle AP.

La prise en compte des exceptions déclenchées par l'exécution de l'application logicielle AP permet de déclencher l'étape d'anticipation plus fréquemment pour améliorer les performances du processeur multi-cœurs en anticipant des requêtes à venir nécessitant une transaction.

Dans les différents modes de réalisation, le contrôleur d'accès 18 est configuré pour la détermination d'une requête anticipée susceptible d'être émise ultérieurement par l'application logicielle AP.

Pour ce faire, le contrôleur d'accès 18 est par exemple configuré pour enregistrer des traces des transactions réalisées pour l'application logicielle AP, et pour déterminer une requête anticipée en fonction des transactions réalisées préalablement pour l'application logicielle AP.

Le contrôleur d'accès 18 comprend par exemple un automate logiciel configuré pour déterminer une requête anticipée en fonction des transactions réalisées préalablement pour l'application logicielle AP.

Pour la prédiction d'une requête, il est possible de réaliser un profilage des requêtes de l'application logicielle AP.

Un tel profilage permet par exemple de déterminer des tables de requêtes 20 associant des séquences de requêtes caractéristiques à des requêtes probables associées. Ainsi, en cas de détection d'une séquence de requêtes caractéristique, la requête anticipée est déterminée comme étant la requête probable associée à la séquence de requêtes caractéristique.

Le profilage des requêtes d'une application logicielle AP est effectué au cours d'une ou plusieurs exécutions de l'application logicielle AP, par simulation du fonctionnement de l'application logicielle AP et/ou par analyse statique de l'application logicielle AP.

Le procédé de contrôle est mis en œuvre sur un ou plusieurs cœurs 10 et pour le partage d'une ou plusieurs ressources communes 12. Chaque cœur 10 mettant en œuvre le procédé de contrôle peut être configuré indépendamment pour la réalisation des étapes d'anticipation et de planification.

Dans le cas de plusieurs ressources communes 12, il est envisageable de déterminer une politique de partage des ressources communes 12 selon laquelle chaque fenêtre temporelle F est allouée à un seul cœur 10 pour l'accès à l'ensemble des ressources communes 12.

En variante, il est envisageable de déterminer une politique de partage des ressources communes 12 selon laquelle au moins une même fenêtre temporelle F est allouée à un premier cœur 10 pour une première ressource commune 12 et à un deuxième cœur 10 distinct du premier cœur 10 pour une deuxième ressource commune 12 distincte de la première ressource commune 12. Ceci est possible si les premier et deuxième cœurs 10 ne sont pas en concurrence pour les première et deuxième ressources communes 12.

Le procédé de contrôle selon l'invention permet donc de diminuer le temps d'exécution d'applications logicielles sur un processeur multi-cœurs embarquant un contrôleur d'accès 18, en réalisant des transactions en avance de phase, par prédiction ou anticipation de requêtes nécessitant une transaction et réalisation de la transaction en avance, avant l'émission effective de la requête par l'application logicielle.

Le procédé de contrôle est applicable en particulier à un calculateur d'un système avionique comme décrit précédemment. Il est applicable plus généralement à tout calculateur, en particulier un calculateur nécessitant un traitement des requêtes des applications logicielles dans un temps borné. Il est applicable notamment à un calculateur embarqué d'un système avionique, d'un système spatial ou d'un système ferroviaire.

## Revendications

1. Procédé de contrôle d'un processeur multi-cœurs comprenant plusieurs cœurs (10) physiquement distincts partageant au moins une ressource matérielle commune (12) selon une politique de partage basée sur des fenêtres temporelles (F) distinctes, chaque fenêtre temporelle (F) étant allouée à un ou plusieurs cœurs (10) pour l'accès à une ressource matérielle commune (12), le procédé de contrôle comprenant :
- l'anticipation d'une requête devant être émise par une application logicielle (AP) exécutée par un cœur (10) et nécessitant une transaction entre ce cœur (10) et la ressource commune (12), avant l'émission effective de cette requête par l'application logicielle (AP) ;
- la planification de la transaction dans une fenêtre temporelle (F) à venir allouée audit cœur (10) pour l'accès à la ressource commune (12) ;
- la réalisation de la transaction planifiée dans la fenêtre temporelle (F) et le chargement des données dans une mémoire cache privée (16) dudit cœur (10) ; et
- la restitution des données à l'application logicielle (AP) à partir de la mémoire cache privée (16) à l'émission effective de la requête par l'application logicielle (AP),
dans lequel les étapes d'anticipation et de planification sont réalisées par un contrôleur d'accès (18) logiciel du cœur (10), le contrôleur d'accès (18) étant configuré pour la mise en œuvre de la politique de partage des ressources communes, le contrôleur d'accès (18) étant configuré pour la détermination d'une requête anticipée susceptible d'être émise ultérieurement par l'application logicielle (AP),
le procédé de contrôle étant **caractérisé en ce qu'**il comprend le déclenchement des étapes d'anticipation et de planification au déclenchement d'un défaut de page provoqué par l'émission d'une requête émise nécessitant une transaction entre ledit cœur (10) et la ressource commune (12) pour servir la requête émise, la requête anticipée étant distincte de la requête émise.

2. Procédé de contrôle selon la revendication 1, dans lequel le cœur (10) poursuit l'exécution de l'application logicielle (AP) à partir de la mémoire cache privée (16) entre la planification de la transaction et la réalisation de la transaction.

3. Procédé de contrôle selon la revendication 1 ou 2, comprenant le déclenchement des étapes d'anticipation et de planification à l'émission d'un appel système par l'application logicielle (AP).

4. Procédé de contrôle selon l'une quelconque des revendications précédentes, dans lequel la requête anticipée est planifiée après la requête émise.

5. Procédé de contrôle selon l'une quelconque des revendications précédentes, comprenant le déclenchement d'une exception provoqué par une requête émise par l'application logicielle (AP).

6. Procédé de contrôle selon l'une quelconque des revendications précédentes, dans lequel la requête anticipée est déterminée en détectant une séquence de requêtes précédentes ayant nécessité une transaction, et en comparant la séquence de requêtes détectée à des séquences de requêtes caractéristiques prédéfinies, chacune associée à une requête anticipée prédéfinie.

7. Procédé de contrôle selon l'une quelconque des revendications précédentes, dans lequel le cœur (10) exécute son propre contrôleur d'accès (18) localement, sans accéder à la ou aux ressource(s) commune(s) (12).

8. Procédé de contrôle selon l'une quelconque des revendications précédentes, dans lequel le contrôleur d'accès (18) possède des instructions de codes qui sont entièrement stockées dans la mémoire cache privée (16) du cœur (10) et exécutable en utilisant uniquement la mémoire cache privée (16) de ce cœur (10).

9. Calculateur comprenant un processeur multi-cœurs possédant plusieurs cœurs (10) physiquement distincts et au moins une ressource matérielle commune (12) partagée par les cœurs (10) et accessible aux cœurs (10) selon une politique de partage de ressources communes basée sur des fenêtres temporelles distinctes, chaque fenêtre temporelle étant allouée à un ou plusieurs cœurs (10) pour l'accès à la ressource matérielle commune (12), dans lequel au moins un cœur (10) comprend un contrôleur d'accès (18) logiciel pour le contrôle des transactions entre ce cœur (10) et la ressource matérielle commune (12), le contrôleur d'accès (18) étant configuré pour la mise en œuvre d'un procédé de contrôle selon l'une quelconque des revendications précédentes.

## Patentansprüche

1. Verfahren zur Steuerung eines Multikernprozessors, umfassend mehrere physisch unterschiedliche Kerne (10), die mindestens eine gemeinsame Hardware-Ressource (12) gemäß einer Teilungsstrategie, basierend auf unterschiedlichen Zeitfenstern (F), teilen, wobei jedes Zeitfenster (F) einem oder mehreren Kernen (10) für den Zugriff auf eine gemeinsame Hardware-Ressource (12) zugewiesen ist, wobei das Verfahren zur Steuerung Folgendes umfasst:
- das Antizipieren einer Anfrage, bevor sie von einer Softwareanwendung (AP), die von einem Kern (10) ausgeführt wird, ausgegeben wird, und eine Transaktion zwischen diesem Kern (10) und der gemeinsamen Ressource (12) erfordert, vor der tatsächlichen Ausgabe dieser Anfrage durch die Softwareanwendung (AP);
- das Planen der Transaktion in einem künftigen Zeitfenster (F), das dem Kern (10) für den Zugriff auf die gemeinsame Ressource (12) zugewiesen ist;
- das Ausführen der geplanten Transaktion im Zeitfenster (F) und das Laden der Daten in einen privaten Cache-Speicher (16) des Kerns (10); und
- das Rücksenden der Daten an die Softwareanwendung (AP) aus dem privaten Cache-Speicher (16) nach der tatsächlichen Ausgabe der Anfrage durch die Softwareanwendung (AP),
wobei die Schritte des Antizipierens und des Planens von einer Software-Zugriffssteuerung (18) des Kerns (10) durchgeführt werden, wobei die Zugriffssteuerung (18) konfiguriert ist, um die Strategie zum Teilen der gemeinsamen Ressourcen zu implementieren, wobei die Zugriffssteuerung (18) konfiguriert ist, um eine antizipierte Anfrage zu bestimmen, die voraussichtlich später von der Softwareanwendung (AP) ausgegeben wird,
wobei das Verfahren zur Steuerung **dadurch gekennzeichnet ist, dass** es das Auslösen der Schritte des Antizipierens und des Planens beim Auslösen eines Seitenfehlers umfasst, hervorgerufen durch die Ausgabe einer ausgegebenen Anfrage, die eine Transaktion zwischen dem Kern (10) und der gemeinsamen Ressource (12) erfordert, um die ausgegebene Anfrage zu bedienen, wobei die antizipierte Anfrage verschieden von der ausgegebenen Anfrage ist.

2. Verfahren zur Steuerung nach Anspruch 1, wobei der Kern (10) die Ausführung der Softwareanwendung (AP) aus dem privaten Cache-Speicher (16) zwischen der Planung der Transaktion und der Ausführung der Transaktion fortsetzt.

3. Verfahren zur Steuerung nach Anspruch 1 oder 2, umfassend das Auslösen der Schritte des Antizipierens und Planens bei der Ausgabe eines Systemaufrufs durch die Softwareanwendung (AP).

4. Verfahren zur Steuerung nach einem der vorhergehenden Ansprüche, wobei die antizipierte Anfrage nach der ausgegebenen Anfrage geplant wird.

5. Verfahren zur Steuerung nach einem der vorhergehenden Ansprüche, umfassend das Auslösen einer Ausnahme, die durch eine Anfrage hervorgerufen wird, die von der Softwareanwendung (AP) ausgegeben wurde.

6. Verfahren zur Steuerung nach einem der vorhergehenden Ansprüche, wobei die antizipierte Anfrage bestimmt wird, indem eine Sequenz vorheriger Anfragen, die eine Transaktion erforderten, detektiert wird, und indem die detektierte Sequenz von Anfragen mit vordefinierten charakteristischen Sequenzen von Anfragen verglichen wird, die jeweils einer vordefinierten antizipierten Anfrage zugeordnet sind.

7. Verfahren zur Steuerung nach einem der vorhergehenden Ansprüche, wobei der Kern (10) seine eigene Zugriffssteuerung (18) lokal ausführt, ohne auf die gemeinsame(n) Ressource(n) (12) zuzugreifen.

8. Verfahren zur Steuerung nach einem der vorhergehenden Ansprüche, wobei die Zugriffssteuerung (18) Codeanweisungen enthält, die vollständig im privaten Cache-Speicher (16) des Kerns (10) gespeichert sind und ausschließlich unter Verwendung des privaten Cache-Speichers (16) dieses Kerns (10) ausgeführt werden können.

9. Computer, umfassend einen Mehrkernprozessor, der mehrere Kerne (10) aufweist, die physisch unterschiedlich sind, und mindestens eine gemeinsame Hardware-Ressource (12), die von den Kernen (10) geteilt und für die Kerne (10) zugänglich ist, gemäß einer Strategie zur Teilung von gemeinsamen Ressourcen, basierend auf unterschiedlichen Zeitfenstern, wobei jedes Zeitfenster einem oder mehreren Kernen (10) für den Zugriff auf die gemeinsame Hardware-Ressource (12) zugewiesen ist, wobei mindestens ein Kern (10) eine Software-Zugriffsteuerung (18) zur Steuerung der Transaktionen zwischen diesem Kern (10) und der gemeinsamen Hardware-Ressource (12) umfasst, wobei die Zugriffssteuerung (18) konfiguriert ist, um ein Verfahren zur Steuerung nach einem der vorhergehenden Ansprüche zu implementieren.

## Claims

1. A control method for a multi-core processor comprising several physically separate cores (10) sharing at least one common material resource (12) according to a sharing policy based on different time windows (F), each time window (F) being attributed to at least one core (10) for access to a common material resource (12), the control method comprising:
- the anticipation of a request to be emitted by a software application (AP) run by a core (10) and requiring a transaction between said core (10) and the common resource (12), before the actual emission of this request by the software application (AP);
- the planning of the transaction in a future time window (F) attributed to said core (10) for access to the common resource (12);
- the implementation of the planned transaction in the time window (F) and the loading of the data into a private cache memory (16) of said core (10); and
- the restitution of the data to the software application (AP) from the private cache memory (16) upon the actual emission of the request by the software application (AP);
wherein the anticipation and planning steps are carried out by a software access controller (18) of the core (10), the access controller (18) being configured for the implementation of the sharing policy of the common resources, the access controller (18) being configured for the determination of an anticipated request likely to be issued subsequently by the software application (AP),
the control method being **characterized in that** it comprises the triggering of the anticipation and planning steps upon the triggering of a page fault caused by the emission of an emitted request requiring a transaction between said core (10) and the common resource (12) to serve the emitted request, the anticipated request being distinct from the emitted request.

2. The control method according to claim 1, wherein the core (10) continues the execution of the software application (AP) from the private cache memory (16) between the planning of the transaction and the implementation of the transaction.

3. The control method according to claim 1 or 2, comprising the triggering of the anticipation and planning steps upon the emission of a system call by the software application (AP).

4. The control method according to any one of the preceding claims, wherein the anticipated request is planned after the emitted request.

5. The control method according to any one of the preceding claims, comprising the triggering of an exception caused by an emitted request by the software application (AP).

6. The control method according to any one of the preceding claims, wherein the anticipated request is determined by detecting a sequence of preceding requests having required a transaction, and comparing the detected sequence of requests to predefined characteristic sequences of requests, each associated with a predefined anticipated request.

7. The control method according to any one of the preceding claims, in which the core (10) executes its own access controller (18) locally, without accessing the shared resource(s) (12).

8. The control method according to any one of the preceding claims, in which the access controller (18) has code instructions that are stored entirely in the private cache memory (16) of the core (10) and executable using only the private cache memory (16) of that core (10).

9. A computer comprising a multi-core processor having several physically separate cores (10) and at least one common material resource (12) shared by the cores (10) and accessible to the cores (10) according to a sharing policy based on separate time windows, each time window being attributed to at least one core (10) for the access to the common material resource (12), wherein at least one software access controller (18) for the control of the transactions between a core (10) and the common material resource (12) and/or a software application (AP) implemented on the core (10) are configured for the implementation of a control method according to any one of the preceding claims.
